# EUROPEAN PATENT APPLICATION

(11) **EP 4 838 741 A1**
(43) Date of publication of application: **11.11.2026**
(21) Application number: 25747459.3
(22) Date of filing: 08.01.2025
(51) Int. Cl.: H02J 3/38, H02J 3/32, H02J 13/00

(54) **ZERO-CARBON SMART PARK ENERGY SYSTEM**

(30) Priority: 04.02.2024 CN 202410157221
(71) Applicant: Hefei Gotion High-Tech Power Energy Co., Ltd., Hefei, Anhui 230012 (CN)
(72) Inventor: CHENG, Qianqian, Hefei, Anhui 230012 (CN); WANG, Xinxin, Hefei, Anhui 230012 (CN)
(74) Representative: Studio Torta S.p.A.
(86) International application number: PCT/CN2025/071284
(87) International publication number: WO 2025/161883

(57) **Abstract**

The present disclosure relates to a zero-carbon smart park energy system, comprising an energy supply module, an energy distribution module and an energy utilization module. The energy supply module comprises a primary energy system and a secondary energy system that satisfy energy consumption requirements of various scenarios in a park, and supplies primary energy and/or secondary energy for the energy utilization module. The energy distribution module comprises a power distribution system, an alternating-current and direct-current apparatus, an energy storage system, a reactive power compensation system and an integrated energy management and control system, is connected to the energy supply module and is configured to provide a control signal for the energy supply module, so as to distribute the energy to the energy utilization module. The energy utilization module comprises a park lighting system, a central air conditioning system, a conference room system and a charging pile system. The present disclosure can achieve integrated energy management and control for generation, grid, load and storage integration of the park.

## Description

### Technical Field

The present disclosure relates to the technical field of park energy Internet, and in particular, to a zero-carbon smart park energy system.

### Background

The park energy Internet is one of the best application scenarios for multi-energy collaborative utilization and integrated energy services under the background of low-carbon economy, and holds significant strategic importance for promoting the optimization and adjustment of China's energy structure. For typical concentrated energy-consuming areas such as industrial parks, large public buildings, new-type towns, and residential communities, the construction of integrated energy systems to improve energy utilization efficiency is an important measure to promote clean, low-carbon, safe and efficient energy development. Zero-carbon development of parks is an effective practice for promoting zero-carbon energy supply and zero-carbon economic development models.

While social electricity demand is growing increasingly, energy waste is also a serious issue. Currently, in the integrated energy construction of some parks, there exist problems such as extensive energy supply, lack of overall planning, complex operational characteristics of new energy, outdated system control, and insufficient smart grid interconnection. As a result, energy has not been rationally allocated or maximally utilized. To ensure production needs, enterprises urgently need to carry out power system reform in the parks to improve energy supply security and regulation capability.

### Summary

With regard to the described problem, the objective of the present disclosure is to provide a zero-carbon smart park energy system, so as to achieve integrated energy management and control for generation, grid, load and storage integration of the park.

In order to achieve the described objective, the present disclosure adopts the following technical solution: a zero-carbon smart park energy system, including: an energy supply module, an energy distribution module and an energy utilization module; the energy supply module includes a primary energy system and a secondary energy system that satisfy energy consumption requirements of various scenarios in a park, and supplies primary energy and/or secondary energy for the energy utilization module; the energy distribution module includes a power distribution system, an alternating-current and direct-current apparatus, an energy storage system, a reactive power compensation system and an integrated energy management and control system, is connected to the energy supply module and is configured to provide a control signal for the energy supply module, so as to distribute energy to the energy utilization module; the energy utilization module includes a garden lighting system, a central air conditioning system, a conference room system and a charging pile system.

As at least one alternative embodiment, the primary energy system includes a distributed energy system, and the distributed energy system includes a photovoltaic power generation device, a wind power generation device, and/or a geothermal power generation device; the secondary energy system includes a power grid and/or a park power station.

As at least one alternative embodiment, the photovoltaic power generation device includes a photovoltaic component, a photovoltaic inverter, a photovoltaic combiner box, a grid-connected access system, and a photovoltaic control system;
the photovoltaic module is connected to one end of the photovoltaic combiner box by means of the photovoltaic inverter; the other end of the photovoltaic combiner box is connected to the grid-connected access system; the grid-connected access system is connected to the photovoltaic control system, and is controlled by the photovoltaic control system to connect to the power grid.

As at least one alternative embodiment, the photovoltaic power generation device adopts building-integrated photovoltaic tiles, with full roof coverage.

As at least one alternative embodiment, the power distribution system includes a primary power distribution system and a secondary power distribution system;
the primary power distribution system is connected to the primary energy system;
the secondary power distribution system is a relay protection system, and the secondary power distribution system is connected to the secondary energy system.

As at least one alternative embodiment, the energy storage system includes a containerized energy storage system and a distributed outdoor cabinet energy storage system;
the containerized energy storage system includes a battery module, an energy storage battery container, an inverter-booster integrated system, a grid-connected access system, a secondary power distribution system, a computer monitoring system, and an energy management system (EMS); the battery module and the battery storage container are connected to the grid-connected access system by means of the inverter-booster integrated system; the grid-connected access system is connected to the secondary power distribution system; and the grid-connected access system, the secondary power distribution system, and the EMS are all connected to the computer monitoring system; the EMS is connected to the battery module and the battery storage container to control a battery energy storage status;
the distributed outdoor cabinet energy storage system includes a battery module, a thermal management system, a PCS system, and a local control system; the battery module and the thermal management system are connected to a local control system by means of the PCS system.

As at least one alternative embodiment, the integrated energy management and control system exchanges information with the conference room system, the central air conditioning system, the charging pile system, and the park lighting system, respectively.

As at least one alternative embodiment, the conference room system includes a curtain control system, a display screen control system, a central air conditioning control system, and a smart lighting control system;
the central air conditioning control system exchanges information with the curtain control system, the display screen control system, and the smart lighting control system; and
according to preset values, controlling a light intensity and an air conditioning temperature in a conference room, thereby achieving intelligent control and energy saving and emission reduction on conference room equipment.

As at least one alternative embodiment, the central air conditioning system is connected to the central air conditioning control system, the central air conditioning control system includes a multi-split centralized control system, and the multi-split centralized control system is in communication with the integrated energy management and control system by means of several gateways, wherein the gateways support communication protocols including an Modbus protocol and a Bacnet protocol of an IMMPRO system.

As at least one alternative embodiment, the charging pile system includes AC/DC charging piles, a concentrator, a battery management system, and a charging management service platform; the AC/DC charging piles exchange data with the concentrator by means of a CAN bus, and the concentrator exchanges data with the battery management system and the charging management service platform by means of wired Internet or wireless GPRS network.

The present disclosure has the following advantages due to the adoption of the above technical solutions:
1. By means of the coordinated operation of the three systems of the energy supply system, the energy distribution system, and the energy utilization system, the present disclosure enables the unified management, control, and maintenance of the park's integrated energy. It is applicable to scenarios such as various industrial parks, new towns, and smart parks, thereby improving the economic benefits of electricity consumption in the park, contributes to the achievement of carbon peaking and carbon neutrality goals, and providing significant social benefits.
2. The present disclosure provides a technical solution for zero-carbon smart parks, which integrates the renewable energy resources, the electrochemical energy storage, the power distribution networks, the intelligent office systems, and the controllable loads. It achieves integrated energy management and control for generation, grid, load and storage integration of the park and can be applied to typical concentrated energy consumption areas, including various industrial parks, large public buildings, new urban districts, and residential communities.

### Brief Description of the Drawings

Various other advantages and benefits will become apparent to those of ordinary skill in the art upon reading the following detailed description of preferred embodiments. The drawings are only for the purpose of illustrating the preferred embodiments, and are not considered to limit the present disclosure. Throughout the drawings, the same reference signs denote the same components. In the drawings:
Fig. 1 is a schematic diagram of an energy networking architecture of a smart park according to an embodiment of the present disclosure;
Fig. 2 is a schematic diagram of the principle of a charging pile according to an embodiment of the present disclosure;
Fig. 3 is a schematic diagram of intelligent management and control of a central air conditioner according to an embodiment of the present disclosure;
Fig. 4 is a schematic diagram of a control flow of a smart conference room according to an embodiment of the present disclosure.

### Detailed Description of the Embodiments

The exemplary embodiments of the present disclosure will be described in more detail below with reference to the accompanying drawings. Although the exemplary embodiments of the present disclosure are shown in the accompanying drawings, it should be understood that the present disclosure can be implemented in various forms and should not be limited by the embodiments described herein On the contrary, these embodiments are provided in order to enable a more thorough understanding of the present disclosure and to fully convey the scope of the present disclosure to those skilled in the art.

The construction of a zero-carbon smart park is a complex systematic project that needs the integration of the "carbon neutrality" concept throughout the entire life cycle of the park, including planning, construction, and management. The implementation of a zero-carbon smart park cannot be achieved without the support of various means such as energy conservation, emission reduction, carbon sequestration, and carbon sinks. Meanwhile, efforts should be made to advance low-carbon industrial development, green energy transition, aggregated facility sharing, resource recycling, and intelligent management of carbon elements, in order to attain a self-balanced state between carbon emission and carbon sequestration within the park, and to achieve the deep integration of production, ecology, and livelihood. The construction of a zero-carbon smart park requires clear target visions and development strategies, the establishment of capacity safeguards for zero-carbon transformation, reliance on key technologies and essential elements for support, and continuous advancement along proven and effective pathways.

The zero-carbon park is built upon the foundation of a smart park fully empowered by digitalization, with digital technologies permeating the entire process of construction and operation of the zero-carbon park. Digitalization and intelligentization have become fundamental characteristics of zero-carbon parks. Therefore, zero-carbon parks are necessarily smart parks.

During the initial construction phase, zero-carbon smart parks need to integrate the concepts of smart energy and low-carbon development throughout the entire process of comprehensive planning, construction, and development of the park. By fully utilizing Internet of Things and big data technologies in aspects such as land usage and spatial planning, energy and buildings, resources and environment, transportation, and management, carbon emissions can be minimized to the greatest extent. This approach coordinates the economic and ecological development of the park and actively promotes the creation of industrial parks with innovative development models.

Currently, in the integrated energy construction of some parks, there exist problems such as extensive energy supply, lack of overall planning, complex operational characteristics of new energy, outdated system control, and insufficient smart grid interconnection. As a result, energy has not been rationally allocated or maximally utilized.

While social electricity demand is growing increasingly, energy waste is also a serious issue. Recently, the Chinese government has introduced policies on power rationing and load shedding for industrial parks and enterprises. To ensure stable production needs, enterprises urgently require power system reforms in these industrial parks to enhance energy supply security and regulatory capabilities.

In the construction of a zero-carbon smart park, in addition to the low-energy-consumption design of the buildings themselves, other approaches are needed to achieve the goals of energy saving, emission reduction, and green and low-carbon development. Therefore, the present disclosure addresses the needs of zero-carbon smart park construction from the energy side, solves the problem of rational configuration and control of integrated energy in zero-carbon parks, and provides a solution for building zero-carbon parks.

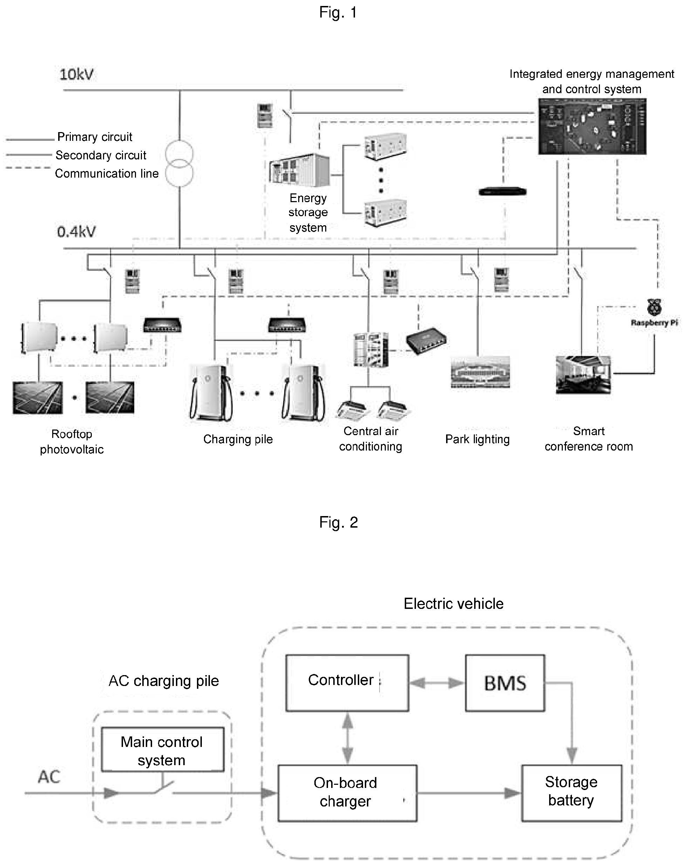

As shown in Fig. 1, in an embodiment of the present disclosure, provided is a zero-carbon smart park energy system, including an energy supply module, an energy distribution module and an energy utilization module.

The energy supply module includes a primary energy system and a secondary energy system that satisfy energy consumption requirements of various scenarios in a park, and supplies primary energy and/or secondary energy for the energy utilization module;
the energy distribution module includes a power distribution system, an alternating-current and direct-current apparatus, an energy storage system, a reactive power compensation system and an integrated energy management and control system, is connected to the energy supply module and is configured to provide a control signal for the energy supply module, so as to distribute the energy to the energy utilization module;
the energy utilization module includes a garden lighting system, a central air conditioning system, a conference room system and a charging pile system, mainly covering the energy consumption of major infrastructure facilities, industrial production processes, and personnel activities within the park.

In an example embodiment, the primary energy system includes a distributed energy system; and the distributed energy system includes a photovoltaic power generation device, a wind power generation device, and/or a geothermal power generation device; the secondary energy system includes a power grid and/or a park power station.

In the present embodiment, the photovoltaic power generation device includes a photovoltaic component, a photovoltaic inverter, a photovoltaic combiner box, a grid-connected access system, and a photovoltaic control system. The photovoltaic module is connected to one end of the photovoltaic combiner box by means of the photovoltaic inverter; the other end of the photovoltaic combiner box is connected to the grid-connected access system; the grid-connected access system is connected to the photovoltaic control system, and is controlled by the photovoltaic control system to connect to the power grid. In the present embodiment, the photovoltaic component, the photovoltaic inverter, the photovoltaic combiner box, the grid-connected access system, and the photovoltaic control system which are used in the photovoltaic power generation device are all mature related technologies. Therefore, the internal composition and working principles of each component are not described in detail herein.

As an example embodiment, the photovoltaic power generation device in the park employs building-integrated photovoltaic (BIPV) tiles (a smart photovoltaic tile system), with full roof coverage, excellent thermal insulation performance, and reduced internal air conditioning costs.

In the present embodiment, the primary energy in the park is mostly in the form of distributed energy systems, such as the solar energy, the wind energy, and the geothermal energy. The secondary energy includes electricity from the power grid or the park's power station, as well as coal, gas, liquefied gas, and thermal energy. The production and supply of these secondary energy sources often involve numerous equipment and systems within the park, commonly including various types of power generation equipment, such as diesel generators, photovoltaic systems, and wind turbines, as well as thermal energy-related equipment, including boilers, gas turbines, and HVAC systems. The low-carbon level of the energy supply adopted in the present embodiment largely determines the effectiveness of the overall carbon management of the park, and constitutes a key component in achieving low-carbon operations.

In an example embodiment, the power distribution module includes a primary power distribution system and a secondary power distribution system. The primary power distribution system is connected to the primary energy system; the secondary power distribution system is a relay protection system, and the secondary power distribution system is connected to the secondary energy system.

As an example embodiment, in terms of electric power, the power distribution system connects the power grid, the distributed power generation equipment, and the power consumption equipment. The key technologies which the power distribution system generally includes are the primary power distribution system, the secondary power distribution (relay protection) system, the AC/DC equipment, the energy storage and reactive power compensation system, the integrated energy management and control system, and the related information system. In an era where the share of electricity in park energy consumption is gradually increasing, the stability and resilience of the power distribution system determine the lower bound of energy security in the park, and serve as the fundamental guarantee for production and daily life in the park. Furthermore, due to the intermittent nature of major clean energy supply sources such as photovoltaic and wind power, as well as the increasing prevalence of AC/DC hybrid equipment and systems, the power distribution system is also tasked with ensuring stable supply and maintaining power quality.

In the present embodiment, the energy storage system includes a containerized energy storage system and a distributed outdoor cabinet energy storage system; the containerized energy storage system includes a battery module, an energy storage battery container, an inverter-booster integrated system, a grid-connected access system, a secondary power distribution system, a computer monitoring system, and an energy management system (EMS); the battery module and the battery storage container are connected to the grid-connected access system by means of the inverter-booster integrated system; the grid-connected access system is connected to the secondary power distribution system; and the grid-connected access system, the secondary power distribution system, and the EMS are all connected to the computer monitoring system; the EMS is connected to the battery module and the battery storage container to control the battery energy storage status;
the distributed outdoor cabinet energy storage system includes a battery module, a thermal management system, a PCS system, and a local control system; the battery module and the thermal management system are connected to the local control system by means of the PCS system.

The battery energy storage system of the park is sized with the energy storage system with an appropriate capacity based on the park's load analysis and peak-valley electricity price assessment. The energy storage system includes the large-scale containerized energy storage system and the distributed outdoor cabinet energy storage system. The containerized energy storage system includes a battery module, an energy storage battery container, an inverter-booster integrated system, a grid-connected access system, a secondary power distribution system, a computer monitoring system, and an energy management system (EMS); the distributed outdoor cabinet energy storage system includes a battery module, a thermal management system, a PCS system, and a local control system.

In the present embodiment, the integrated energy management and control system exchanges information with the conference room system, the central air conditioning system, the charging pile system, and the park lighting system, respectively.

The central air conditioning system includes a chiller, a heat pump, a chilled and hot water circulation system, a cooling water circulation system, and a terminal air handling equipment. The central air conditioning system is installed in the office buildings within the park to provide appropriate temperatures for the office areas. The central air conditioning system is centrally located in the air conditioning equipment room and consists of chillers, heat pumps, chilled and hot water circulation systems, cooling water circulation systems, and terminal air handling equipment, such as air handling units and fan coil units.

The conference room system includes a curtain control system, a display screen control system, a central air conditioning control system, and a smart lighting control system. The central air conditioning control system exchanges information with the curtain control system, the display screen control system, and the smart lighting control system in a conference room. By analyzing data, according to software preset values, the central air conditioning control system controls the light intensity and air conditioning temperature in the conference room, thereby achieving intelligent control of conference room equipment and realizing energy saving and emission reduction.

The central air conditioning system is connected to the central air conditioning control system, the central air conditioning control system includes a multi-split centralized control system, and the multi-split centralized control system is in communication with the comprehensive energy management and control system by means of several gateways, wherein the gateways support communication protocols including an Modbus protocol and a Bacnet protocol of an IMMPRO system. Furthermore, the central air conditioning control system contains energy-saving control software.

The charging pile system includes a AC/DC charging pile, a concentrator, a battery management system (BMS), and a charging management service platform. The AC/DC charging pile exchange data with the concentrator by means of a CAN bus, and the concentrator exchanges data with the battery management system and the charging management service platform by means of wired Internet or wireless GPRS network.

Embodiments: as shown in figures 1-4, the configuration of the zero-carbon smart park in the present embodiment includes: a renewable energy photovoltaic power generation system, an electrochemical energy storage power station system, a park charging pile system, a load-side intelligent central air conditioning control and management system, a smart conference room, and a park integrated energy management and control system.

The energy system of the park is generally divided into three parts: the energy supply, the energy distribution, and the energy utilization. The energy supply refers to the energy used to meet the park's consumption needs, including renewable energy systems and the grid system. The most commonly used and easily implementable renewable energy source for the park is solar energy. Photovoltaic power generation system is used as a supplementary power system to provide clean energy to the park. Energy distribution refers to the rational allocation of the power distribution system in terms of the park's electricity supply. It generally includes the primary power distribution system, the secondary power distribution system, the AC/DC equipment, the energy storage system, and the integrated energy management and control system, etc. Due to the intermittent nature of integration of clean energy, as well as the increasing prevalence of AC/DC hybrid equipment and systems, the power distribution system is also tasked with ensuring stable supply and maintaining power quality. Energy utilization refers to the energy-consuming equipment on the load side of the park, which is the primary source of energy consumption in the park.

As shown in Fig. 1, a typical park networking architecture configuration includes: a photovoltaic power generation system, a battery energy storage system, a park lighting system, a central air conditioning management and control system, a smart conference room, a charging pile system, and an integrated energy management system. The photovoltaic power generation system of the park adopts a low-voltage grid-connected approach and is directly integrated into the park's 400V distribution network, supplying power directly to loads under the 400V AC busbar for self-generation and self-consumption, with any surplus electricity fed into the grid, thereby reducing the curtailment of photovoltaic power. The construction capacity of the energy storage power station of the park is configured according to the actual electricity load and the projected future load increase, which can adopt either high-voltage grid connection or low-voltage grid connection, with the specific access scheme formulated based on actual requirements. The park lighting system, the charging pile, the central air conditioning system, and the similar systems are all major energy-consuming loads in the park. These loads are uniformly connected to the integrated energy management and control platform, where they are centrally monitored at the backend, and energy distribution strategies are formulated accordingly. Renewable energy is prioritized for use, and then the strategy of peak load shifting is employed to maximize the economic benefits of energy storage in the park's application scenarios. In combination with the local peak-valley electricity price differential, peak-valley arbitrage is adopted to save electricity costs for the park, thereby bringing certain economic benefits. The integrated energy management and control system monitors the photovoltaic power generation, surplus energy storage, and load-side electricity consumption in the park, and also integrates information from intelligent devices such as access control and video surveillance systems, so as to achieve energy visibility, energy controllability, and intelligent management, thereby improving management efficiency.

As shown in Fig. 2, the charging pile system includes an AC/DC charging pile, a concentrator, a battery management system (BMS), and a charging management service platform. The main function of the Battery Management System (BMS) is to monitor the operating status of the battery (including voltage, current, and temperature), estimate the State Of Charge (SOC) of the traction battery and the corresponding remaining driving range, and perform battery management to prevent over-discharge, over-charge, over-heating, and severe voltage imbalance among individual cells, thereby maximizing the battery's storage capacity and cycle life. The charging management service platform is also connected to the integrated energy management and control platform of the park, and is uniformly managed and controlled by the backend.

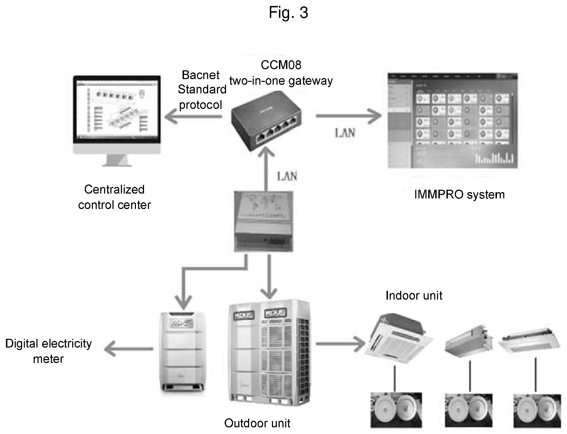

As shown in Fig. 3, the integrated energy management system directly establishes a communication with the IMMPRO system of the air conditioning manufacturer, and selects a gateway that supports both the Modbus protocol and the Bacnet protocol of the IMMPRO system. A certain number of gateways are configured, and corresponding programs are modified to establish a communication channel between the air conditioning system and the integrated energy management system, thereby enabling data monitoring and operational command adjustment for the air conditioning system.

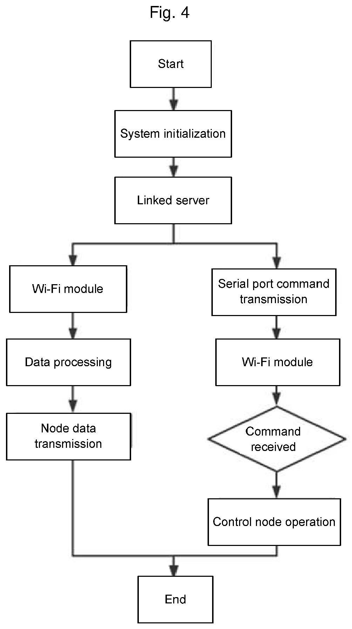

As shown in Fig. 4, an operation method for implementing a smart conference room is illustrated, and the implementation steps are as follows: information from various nodes in the conference room is sent to a Wi-Fi controller by means of serial ports. The controller is built into a Raspberry Pi system, serving as the data center, and transmits data information to the server-side software by means of a Wi-Fi module. Similarly, the server-side software parses user operations and transmits same to the controller. Data processing is performed according to the communication protocol, and the processed command information is then sent to the nodes for relay switching operations.

The present disclosure aims to improve electricity economic benefits and energy management, and establishes a zero-carbon smart park based on office parks, industrial parks, urban communities, and the like. While achieving economic benefits, it can also fulfill the goals of carbon peaking and carbon neutrality, thereby delivering significant social benefits.

The zero-carbon smart park of the present disclosure is applicable to various types of parks, and can serve as a technical reference for the construction of zero-carbon demonstration parks.

Finally, it should be noted that the described embodiments are only used to explain the technical solutions in some embodiments of the present disclosure, rather than limit same. Although the present disclosure has been explained in detail with reference to the embodiments above, it should be understood that a person of ordinary skill in the art would still modify the technical solutions disclosed in the embodiments described above or make equivalent replacements to some of the technical features therein. However, these modifications or replacements shall not render that the nature of the corresponding technical solutions departs from the spirit and scope of the technical solutions in the embodiments of the present disclosure.

### Cross-Reference to Related Application

The present application claims the priority of Chinese Patent (the application no. being 202410157221.3) filed on February 04, 2024, the disclosure of which is incorporated herein by reference in its entirety.

## Claims

1. A zero-carbon smart park energy system, comprising an energy supply module, an energy distribution module and an energy utilization module;
the energy supply module comprises a primary energy system and a secondary energy system that satisfy energy consumption requirements of various scenarios in a park, and supplies primary energy and/or secondary energy for the energy utilization module;
the energy distribution module comprises a power distribution system, an alternating-current and direct-current apparatus, an energy storage system, a reactive power compensation system and an integrated energy management and control system, is connected to the energy supply module and is configured to provide a control signal for the energy supply module, so as to distribute energy to the energy utilization module; and
the energy utilization module comprises a garden lighting system, a central air conditioning system, a conference room system and a charging pile system.

2. The zero-carbon smart park energy system as claimed in claim 1, wherein the primary energy system comprises a distributed energy system, and the distributed energy system comprises a photovoltaic power generation device, a wind power generation device, and/or a geothermal power generation device; the secondary energy system comprises a power grid and/or a park power station.

3. The zero-carbon smart park energy system as claimed in claim 2, wherein the photovoltaic power generation device comprises a photovoltaic component, a photovoltaic inverter, a photovoltaic combiner box, a grid-connected access system, and a photovoltaic control system;
the photovoltaic module is connected to one end of the photovoltaic combiner box by means of the photovoltaic inverter; the other end of the photovoltaic combiner box is connected to the grid-connected access system; the grid-connected access system is connected to the photovoltaic control system, and is controlled by the photovoltaic control system to connect to the power grid.

4. The zero-carbon smart park energy system as claimed in claim 2, wherein the photovoltaic power generation device adopts building-integrated photovoltaic tiles, with full roof coverage.

5. The zero-carbon smart park energy system as claimed in claim 1, wherein the power distribution system comprises a primary power distribution system and a secondary power distribution system;
the primary power distribution system is connected to the primary energy system;
the secondary power distribution system is a relay protection system, and the secondary power distribution system is connected to the secondary energy system.

6. The zero-carbon smart park energy system as claimed in claim 1, wherein the energy storage system comprises a containerized energy storage system and a distributed outdoor cabinet energy storage system;
the containerized energy storage system comprises a battery module, an energy storage battery container, an inverter-booster integrated system, a grid-connected access system, a secondary power distribution system, a computer monitoring system, and an energy management system (EMS); the battery module and the battery storage container are connected to the grid-connected access system by means of the inverter-booster integrated system; the grid-connected access system is connected to the secondary power distribution system; and the grid-connected access system, the secondary power distribution system, and the EMS are all connected to the computer monitoring system; the EMS is connected to the battery module and the battery storage container to control a battery energy storage status;
the distributed outdoor cabinet energy storage system comprises a battery module, a thermal management system, a PCS system, and a local control system; the battery module and the thermal management system are connected to a local control system by means of the PCS system.

7. The zero-carbon smart park energy system as claimed in claim 1, wherein the integrated energy management and control system exchanges information with the conference room system, the central air conditioning system, the charging pile system, and the park lighting system, respectively.

8. The zero-carbon smart park energy system as claimed in claim 7, wherein the conference room system comprises a curtain control system, a display screen control system, a central air conditioning control system, and a smart lighting control system;
the central air conditioning control system exchanges information with the curtain control system, the display screen control system, and the smart lighting control system; and
according to preset values, controlling a light intensity and an air conditioning temperature in a conference room, thereby achieving intelligent control and energy saving and emission reduction on conference room equipment.

9. The zero-carbon smart park energy system as claimed in claim 8, wherein the central air conditioning system is connected to the central air conditioning control system, the central air conditioning control system comprises a multi-split centralized control system, and the multi-split centralized control system is in communication with the integrated energy management and control system by means of several gateways, wherein the gateways support communication protocols including an Modbus protocol and a Bacnet protocol of an IMMPRO system.

10. The zero-carbon smart park energy system as claimed in claim 7, wherein the charging pile system comprises a AC/DC charging pile, a concentrator, a battery management system, and a charging management service platform; the AC/DC charging pile exchanges data with the concentrator by means of a CAN bus, and the concentrator exchanges data with the battery management system and the charging management service platform by means of wired Internet or wireless GPRS network.
